(19) Europäisches Patentamt
European Patent Office
Office européen des brevets

(11) **EP 2 546 657 A1**

(12) **EUROPEAN PATENT APPLICATION**

(43) Date of publication:
**16.01.2013  Bulletin 2013/03**

(51) Int Cl.:
***G01P 3/489*** $^{(2006.01)}$

(21) Application number: **11182872.9**

(22) Date of filing: **27.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **15.07.2011  TW 100125213**

(71) Applicants:
• **Askey Technology (Jiangsu) Ltd.
Economic-Technological Development Area
Wujiang Jiangsu (CN)**

• **Askey Computer Corp.
New Taipei City 235 (TW)**

(72) Inventors:
• **Chou, Ming-Hung
110 Taipei City (TW)**
• **Hsieh, Ching-Feng
108 Taipei City (TW)**

(74) Representative: **Ciceri, Fabio et al
Perani & Partners
Piazza San Babila, 5
20122 Milano (IT)**

(54) **Method and system for measuring speed.**

(57)    A method for measuring speed involves calculating and measuring speed of an object based on a distance and a time obtained by a method for measuring distance and a method for measuring time, respectively. The time between distance measuring sessions is obtained using the cycle number of a reference signal based on a clock mask synchronous with the distance measuring sessions. The time is corrected according to a plurality of phase shift signals generated based on the reference signal. An error of the time is minimized by increasing the quantity of the phase shift signals. The method enhances the accuracy of the measured time between distance measuring sessions, speeds up speed measurement, and reduces the required circuit areas. A system for measuring speed is further introduced for use with the method.

FIG. 1

**Description**

FIELD OF THE INVENTION

The present invention relates to methods and systems for measuring speed, and more particularly, to a precise method and system for measuring speed.

BACKGROUND OF THE INVENTION

A method and system for measuring speed usually start with two stages, that is, distance measurement and time measurement, and then involve calculating the speed or acceleration of an object according to the measured distance and time parameters. Distance measurement usually requires an optical ruler or an encoder. The optical ruler measures the distance traveled by the object during the linear motion thereof. The encoder measures the distance traveled by the object during the circular motion thereof. Time measurement usually entails calculating the time from the commencement of distance measurement of the object to the termination of distance measurement of the object according to a fundamental frequency signal (or defined as known time).

Time measurement involves calculating a time by a default frequency of the fundamental frequency signal and the number of cycles between the commencement of distance measurement and the termination of distance measurement of an object, wherein the precision of the calculated number of cycles of the fundamental frequency signal affects the accuracy of the calculated time.

Normally, calculation of the number of cycles of the fundamental frequency signal requires counting, that is, counting the number of cycles of the fundamental frequency signal during a gate time period that starts from a point in time of commencement of the fundamental frequency signal and ends at a point in time of termination of the fundamental frequency signal.

Nonetheless, the number of cycles of the fundamental frequency signal during the gate time period is seldom an integer, and thus the method is likely to cause an error at the beginning and the end of the gate time period - underestimating or overestimating by a half cycle, for example. In view of this, to measure time, it is usually necessary to maximize the gate time period in order to handle as many cycles as possible and thereby reduce errors. However, the aforesaid solution is performed at the cost of a great increase in the testing time and with the tendency to decrease resolution due to a short gate time period arising from a short period of time measurement and a small number of instances of time measurement.

SUMMARY OF THE INVENTION

It is an objective of the present invention to enhance the speed and accuracy of speed measurement.

Another objective of the present invention is to reduce circuit-occupied area and reduce power consumption.

In order to achieve the above and other objectives, the present invention provides a method for measuring speed, by performing computation of speed measurement of an object with a distance and a time obtained by means of distance measurement and time measurement, characterized in that the time measurement comprises the steps of: providing a reference signal; generating a plurality of phase shift signals of a same frequency based on the reference signal, the phase shift signals being spaced apart from each other by a fixed phase; setting a clock mask, the clock mask starting from a start signal of distance measuring sessions and ending at an end signal of the distance measuring sessions; counting a number $Nd1$ of second triggering states occurring to the phase shift signals during a time period from a point in time of commencement of the clock mask to occurrence of a first triggering state to the reference signal; counting a number $Nb$ of cycles of the reference signal during the time period of the clock mask based on the first triggering state; counting a number $Nd2$ of second triggering states occurring to the phase shift signals during a time period from a point in time of termination of the clock mask to occurrence of a first triggering state to the reference signal; and obtaining a time $t$ of the object by the equation below: $t = (Nb/Fb) + [Nd1/(Fb/M)] - [Nd2/(Fb/M)]$ where frequency of the reference signal is denoted by $Fb$ and number of the phase shift signals by $M$, and $M \geq 2$.

In order to achieve the above and other objectives, the present invention provides a system for measuring speed, comprising: a distance measurement unit for measuring a distance traveled by an object, generating a distance measurement $d$ based on the distance measured, and generating a start signal and an end signal based on distance measuring sessions; a distance measurement signal input end for receiving the start signal, the end signal, and the distance measurement $d$; a speedometer connected to the distance measurement signal input end for receiving the start signal, the end signal, and the distance measurement $d$, generating a reference signal of a frequency $Fb$, generating $M$ phase shift signals based on the reference signal, characterized by a same frequency, and spaced apart from each other by a fixed phase, generating a clock mask starting from the start signal and ending at the end signal, counting a number $Nd1$ of second triggering states occurring to the phase shift signals during a time period from a point in time of commencement of the clock mask to occurrence of a first triggering state to the reference signal, counting a number Nb of cycles of the reference signal during the time period of the clock mask based on the first triggering state, counting a number Nd2 of second triggering states occurring to the phase shift signals during a time period from a point in time of termination of the clock mask to occurrence of a first triggering state to the reference signal, and outputting values d, Fb, M, Nb, Nd1, and Nd2; and a computing device connected to the speedometer for receiving the values d, Fb, M, Nb, Nd1, and Nd2, performing computation with the equation below to obtain a time t of the object, and performing computation of speed measurement of the object based on the time t and the distance measurement d, t = (Nb/Fb) + [Nd1/(Fb/M)] - [Nd2/(Fb/M)] where M 2.

In an embodiment, the speedometer comprises: a fundamental frequency generating unit for generating a fundamental frequency signal; a frequency multiplying unit connected to the fundamental frequency generating unit for turning the fundamental frequency signal into the reference signal by frequency multiplication; and a programmable gate array connected to the distance measurement signal input end for receiving the start signal, the end signal, and the distance measurement d, connected to the frequency multiplying unit for receiving the reference signal, and adapted to generate the values M, Nb, Nd1, and Nd2 and output the values d, Fb, M, Nb, Nd1, and Nd2.

In an embodiment, the computing device is one of a control unit and a computer.

In an embodiment, the first triggering state is one of an upper-edge triggering state and a lower-edge triggering state, and the second triggering state is one of an upper-edge triggering state and a lower-edge triggering state.

In an embodiment, four or eight said phase shift signals are generated.

In an embodiment, the frequency Fb of the reference signal can be directly replaced with a default value.

Accordingly, a method and system for measuring speed of the present invention eliminate time measurement errors by quick and precise multiphase processing and multiply the accuracy of measurement in accordance with the quantity of generated phase shift signals, so as to reduce the area occupied by a circuit and reduce power consumption.

BRIEF DESCRIPTION OF THE DRAWINGS

Objectives, features, and advantages of the present invention are hereunder illustrated with specific embodiments in conjunction with the accompanying drawings, in which:

FIG. 1 is a timing diagram of a method for measuring speed according to an embodiment of the present invention;
FIG. 2 is a flow chart of the method for measuring speed according to an embodiment of the present invention; and
FIG. 3 is a function block diagram of a system for measuring speed according to an embodiment of the present invention.

DETAILED DESCRIPTION OF THE PREFERRED EMBODIMENTS

The steps of a method for measuring speed of the present invention are described in specific embodiments thereof and are, unless otherwise specified, interchangeable in terms of sequence. Furthermore, the concept of "connection" used in the description of specific embodiments of a system for measuring speed according to the present invention is not limited to direction connection; instead, connection can also be effectuated by an intervening element. Also, a "first triggering state" and a "second triggering state" used in the description of the method and system for measuring speed of the present invention comprise one of an upper-edge triggering state and a lower-edge triggering state. The first triggering state and the second triggering state are not mutually exclusive; hence, both the first triggering state and the second triggering state may be upper-edge triggering states or lower-edge triggering states.

In the embodiments of the present invention, a measured time is obtained by making reference to the course of distance measurement of an object, by multiphase processing, and by predetermined equations.

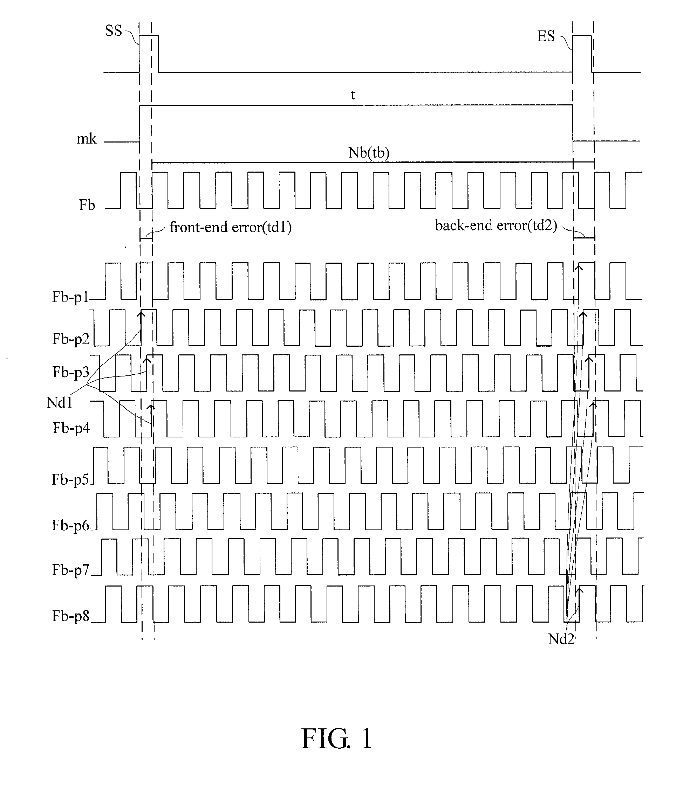

Referring to FIG. 1, there is shown a timing diagram of a method for measuring speed according to an embodiment of the present invention. As shown in FIG. 1, this embodiment is exemplified by eight phase shift signals. Persons skilled in the art should be able to understand that, given at least two phase shift signals, the method and system for measuring speed of the present invention is effective in eliminating errors of time measurement and thereby enhancing the accuracy of the time measured.

A method for measuring speed according to an embodiment of the present invention comprises the steps of:

As shown in FIG. 1, in the course of the distance measurement of an object, a distance measurement unit generates a start signal SS and an end signal ES upon commencement of measurement and termination of measurement, respectively. In an embodiment of the present invention, time measurement starts with the step of providing a reference signal Fb and the step of generating multilevel phase shift signals Fb-p1~Fb-p8 of the same frequency based on the reference signal, wherein the phase shift signals Fb-p1~Fb-p8 are spaced apart from each other by a fixed phase.

The reference signal Fb functions as a fundamental frequency. The phase shift signals are generated from the reference signal Fb. Normally, the phase shift of a signal is effectuated by a digital clock manager (DCM) of a programmable gate array (FPGA). In this embodiment, eight phase shift signals Fb-p1~Fb-p8 are processed by two digital clock managers, and the reference signal Fb is decomposed by a digital clock manager to form four phase shift signals. However, persons skilled in the art should be able to understand that a user can still selectively shut down four of the phase shift decomposition processes even with just one digital clock manager. Hence, with only one digital clock manager, it is still possible to decompose the reference signal Fb into two or three phase shift signals. Hence, users can select the quantity of required phase shift signals as needed and as appropriate for operation of a digital clock manager. Regarding the spacing of phase shift signals, a digital clock manager divides 360° into equal phase portions and distributes the equal phase portions among the phase shift signals. For example, the phase equals $360°/(M - 1)$, where M denotes the number of phase shift signals.

Afterward, a clock mask mk is set. The clock mask mk thus set starts from the start signal SS of distance measuring sessions and ends at the end signal ES of the distance measuring sessions. Hence, the clock mask mk can be triggered synchronously with the start signal SS and the end signal ES, such that the time period of time measurement equals the time period of distance measurement. Regarding the upper-edge triggering signal SS and signal ES shown in FIG. 1, persons skilled in the art understand that the signal SS and the signal ES can be replaced by lower-edge triggering states for denoting the commencement and termination of the distance measuring sessions, respectively.

Upon initialization of the clock mask mk, time measurement kicks off. Referring to FIG. 1, the reference signal Fb does not synchronize with the clock mask mk; hence, the time actually taken to effect the number Nb of cycles of the reference signal Fb measured does not fall within the range of the clock mask mk, thereby resulting in front-end errors and back-end errors.

Hence, in an embodiment of the present invention, the front-end and back-end errors which occur in the course of time measurement are eliminated by means of the phase shift signals.

Regarding the front-end errors, the number Nd1 of second triggering states (upper or lower triggering states) that occur to the phase shift signals Fb-p1~Fb-p8 during the period from the point in time of commencement of the clock mask mk to the point in time when a first triggering state occurs to the reference signal Fb is counted.

Regarding the back-end errors, the number Nd2 of second triggering states (upper or lower triggering states) that occur to the phase shift signals Fb-p1~Fb-p8 during the period from the point in time of termination of the clock mask mk to the point in time when a first triggering state occurs to the reference signal Fb is counted.

Counting the second triggering states that occur to the phase shift signals Fb-p1~Fb-p8 means that elimination of back-end errors requires selecting the upper triggering state as the second triggering state when elimination of front-end errors requires selecting the upper triggering state as the second triggering state, or means that elimination of back-end errors requires selecting the lower triggering state as the second triggering state when elimination of front-end errors requires selecting the lower triggering state as the second triggering state. As shown in FIG. 1, the upper triggering state is selected to be the second triggering state, thereby setting Nd1 to 3 and Nd2 to 5.

As shown in FIG. 1, the time actually taken to measure the distance travelled by an object is denoted by t as expressed by equation (1):

$$t = tb + td1 - td2 \qquad (1)$$

Hence, in a subsequent calculation process, the number Nd1 and the number Nd2 are used in calculating front-end error time td1 and back-end error time td2 to therefore eliminate front-end and back-end errors.

Nb denotes the number of cycles of the reference signal Fb measured within the time period of the clock mask mk. Fb denotes the frequency of the reference signal Fb. M denotes the number of the phase shift signals. The feature "being based on the first triggering state" means that the counting of the number of cycles of the reference signal Fb is in line with the point in time of termination of the front-end error time period td1. Hence, as shown in FIG. 1, the point in time of commencement of the counting of the number of cycles of the reference signal Fb starts from the upper-edge triggering state rather than the lower-edge triggering state. Conversely, if the time period td1 is changed to a time period starting from the point in time of commencement of the clock mask mk and ending at the point in time of occurrence of a lower-edge triggering state (first triggering state) to the reference signal Fb, the front-end error time period td1 will end at the lower-edge triggering state, and the point in time of commencement of the counting of the number of cycles of the reference signal Fb will start from the lower-edge triggering state.

Hence, as indicated by the relationship between time, frequency, and number of cycles, clock mask time tb can be calculated by equation (2),

$$tb = (Nb/Fb) \qquad (2)$$

the front-end error time td1 is calculated by equation (3),

$$td1 = [Nd1/(Fb/M)] \qquad (3)$$

the back-end error time td2 is calculated by equation (4),

$$td2 = [Nd2/(Fb/M)] \qquad (4)$$

Accordingly, the time t is calculated by equation (5),

$$t = (Nb/Fb) + [Nd1/(Fb/M)] - [Nd2/(Fb/M)] \qquad (5)$$

wherein M denotes the number of the phase shift signals, with M 2, indicating that there are at least two said phase shift signals.

Furthermore, as indicated by equation (5), the more the phase shift signals are, the more the multiplication of enhancement of accuracy of measurement is. Hence, when compared with a conventional method which is not based on calibration of front-end errors and back-end errors, the method shown in FIG. 1 and disclosed in an embodiment of the present invention increases accuracy eightfold. The more the phase shift signals are, the shorter the time period is, thereby eliminating increasingly small errors.

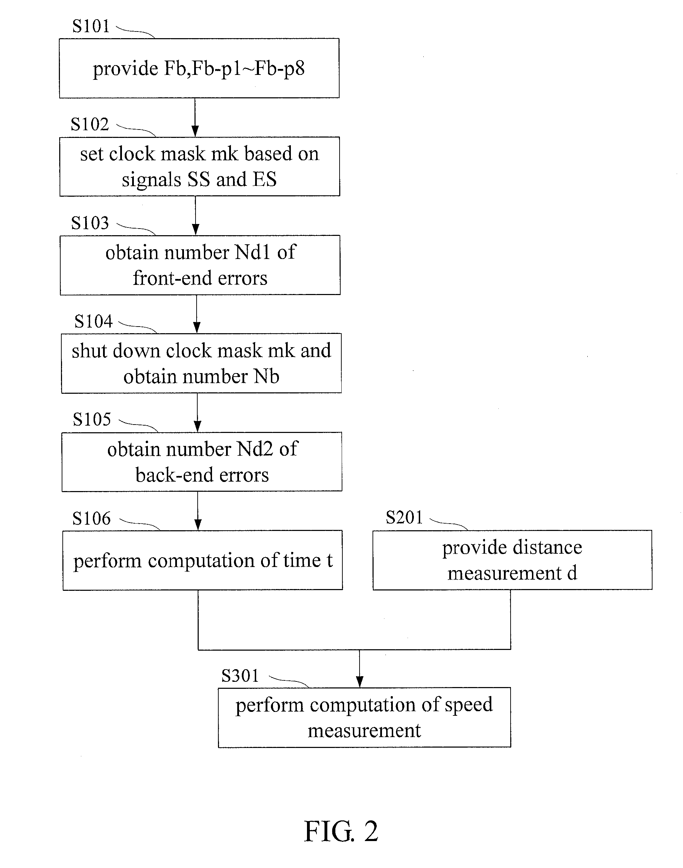

Referring to FIG. 2, there is shown a flow chart of the method for measuring speed according to an embodiment of the present invention. Referring to FIG. 1, time measurement depends on distance measurement, except for provision of the reference signal Fb and the phase shift signals Fb-p1~Fb-p8 thereof in advance. Time measurement comprises the steps of: providing the reference signal Fb, and a plurality of phase shift signals Fb-p1~Fb-p8 (S101); setting the clock mask mk based on signals SS and ES (S102); obtaining number Nd1 of front-end errors (5103); shutting down the clock mask mk and obtaining number Nb (S104); obtaining number Nd2 of back-end errors (S105); and performing computation by equation (5) (S106). Distance measurement comprises the step of generating signals SS and ES and providing distance measurement d (S201). Eventually, in step S301, computation of speed measurement is performed, using time t and distance measurement d to determine speed (d/t) and even determine acceleration [d(d)/d(t)].

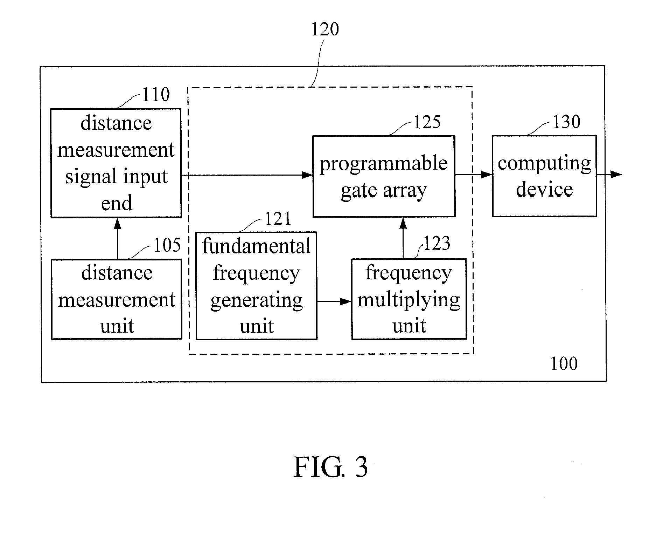

Referring to FIG. 3, there is shown a function block diagram of a system for measuring speed according to an embodiment of the present invention. As shown in FIG. 3, a system 100 for measuring speed comprises a distance measurement unit 105, a distance measurement signal input end 110, a speedometer 120, and a computing device 130.

The distance measurement unit 105 measures the distance travelled by an object, generates a distance measurement d based on the distance thus measured, and generates a start signal SS and an end signal ES based on distance measuring sessions.

The distance measurement signal input end 110 receives the start signal SS, the end signal ES, and the distance measurement d.

The speedometer 120 is connected to the distance measurement signal input end 110 for receiving the start signal SS, the end signal ES, and the distance measurement d. The speedometer 120 generates the reference signal Fb, M phase shift signals spaced apart from each other by a fixed phase, the clock mask mk starting from the start signal SS and ending at the end signal ES, the number Nd1 of second triggering states occurring to the phase shift signals during the time period of front-end errors, the number Nb of cycles of the reference signal Fb during the time period of the clock mask mk, and the number Nd2 of second triggering states occurring to the phase shift signals during a time period of back-end errors, and outputs values d, Fb, M, Nb, Nd1, and Nd2.

In an embodiment, the speedometer 120 comprises a fundamental frequency generating unit 121, a frequency multiplying unit 123, and a programmable gate array 125. The fundamental frequency generating unit 121 generates a fundamental frequency signal. Normally, a low fundamental frequency is generated by a crystal oscillator to cut costs, and then the fundamental frequency is boosted by the frequency multiplying unit 123 connected to the fundamental frequency generating unit 121 for functioning as the reference signal Fb.

The programmable gate array 125 comprises a digital clock manager for functioning as a phase shift generating circuit, a differential circuit for performing upper or lower differentiation (upper-edge triggering or lower-edge triggering) to count Nd1 and Nd2, and a mask circuit for generating the clock mask mk and counting the reference signal Fb. Accordingly, the programmable gate array 125 generates the values M, Nb, Nd1, and Nd2 and outputs the count values d, Fb, M, Nb, Nd1, and Nd2.

The programmable gate array 125 is a conventional element. The system for measuring speed according to an embodiment of the present invention achieves the objectives of the present invention by means of logical elements of the system for measuring speed. The system for measuring speed according to an embodiment of the present invention reduces the required number of the logical elements, dispenses with a large-sized programmable gate array chip, and thus reduces the circuit-occupied area and downsizes the product. For example, if the computing function of a computing device is also incorporated into the programmable gate array, the required number of the logical elements will be greatly increased, thereby increasing the circuit-occupied area. Due to its structural design, it is necessary for the programmable gate array to perform computation by logic, and thus the computation is rapid; however, the required logical elements are bulky. Although a special programmable gate array having a computation structure circuit disposed therein has low logical element spatial requirements and can perform high-speed computation, it incurs an excessively high cost.

The computing device 130 is connected to the speedometer 120 for receiving the values and performing computation by equation (5) to obtain the measured time t, and performing computation of speed measurement by the distance measurement d. The computing device 130 is a control unit (MCU) or a computer. If the computing device 130 is a control unit, then the control unit is usually disposed on the same circuit board as the speedometer 120 is, such that the speed measuring system 100 in its entirety is integrated onto a module; however, the computing device 130 can also be an external computer device for processing a computation procedure in whole with data provided by a measuring module.

To reduce errors further, it is feasible to perform a high-precision measurement process on the generated reference signal Fb beforehand. To preclude any error which might otherwise be produced as a result of a discrepancy between a frequency actually generated by a fundamental frequency generating unit and a frequency multiplier and a given frequency level, it is feasible to measure the reference signal Fb in advance by means of a high-precision frequency counter having a higher resolution than the frequency of the reference signal Fb, and then use the measured reference signal Fb as a default value to be directly stored in the computing device 130. In doing so, in every instance of measurement, the default value always applies to the frequency of the reference signal Fb, thereby dispensing with the need to use a parameter set forth in the specifications of a fundamental frequency generating unit and a frequency multiplier.

In conclusion, a method and system for measuring speed of the present invention eliminate time measurement errors by quick and precise multiphase processing and multiply the accuracy of measurement in accordance with the quantity of generated phase shift signals. An embodiment of the present invention achieves eightfold reduction (corresponding to eight phase shift signals) in errors, effectuates high-precision measurement of speed, and reduces the area occupied by a circuit.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

**Claims**

1. A method for measuring speed, by performing computation of speed measurement of an object with a distance and a time obtained by means of distance measurement and time measurement, **characterized in that** the time measurement comprises the steps of:

   providing a reference signal;
   generating a plurality of phase shift signals of a same frequency based on the reference signal, the phase shift signals being spaced apart from each other by a fixed phase;
   setting a clock mask, the clock mask starting from a start signal of distance measuring sessions and ending at an end signal of the distance measuring sessions;
   counting a number Nd1 of second triggering states occurring to the phase shift signals during a time period from a point in time of commencement of the clock mask to occurrence of a first triggering state to the reference signal;
   counting a number Nb of cycles of the reference signal during the time period of the clock mask based on the first triggering state;
   counting a number Nd2 of second triggering states occurring to the phase shift signals during a time period from a point in time of termination of the clock mask to occurrence of a first triggering state to the reference signal; and
   obtaining a time t of the object by the equation below:

$$t = (Nb/Fb) + [Nd1/(Fb/M)] - [Nd2/(Fb/M)]$$

where frequency of the reference signal is denoted by Fb and number of the phase shift signals by M, and M 2.

2. The method of claim 1, wherein the first triggering state is one of an upper-edge triggering state and a lower-edge triggering state.

3. The method of claim 1, wherein the second triggering state is one of an upper-edge triggering state and a lower-edge triggering state.

4. The method of claim 1, wherein four or eight said phase shift signals are generated.

5. The method of claim 1, further comprising replacing frequency Fb of the reference signal with a default value.

6. The method of claim 1, wherein the fixed phase equals 360°/(M - 1).

7. A system for measuring speed, comprising:

a distance measurement unit for measuring a distance traveled by an object, generating a distance measurement d based on the distance measured, and generating a start signal and an end signal based on distance measuring sessions;

a distance measurement signal input end for receiving the start signal, the end signal, and the distance measurement d;

a speedometer connected to the distance measurement signal input end for receiving the start signal, the end signal, and the distance measurement d, generating a reference signal of a frequency Fb, generating M phase shift signals based on the reference signal, **characterized by** a same frequency, and spaced apart from each other by a fixed phase, generating a clock mask starting from the start signal and ending at the end signal, counting a number Nd1 of second triggering states occurring to the phase shift signals during a time period from a point in time of commencement of the clock mask to occurrence of a first triggering state to the reference signal, counting a number Nb of cycles of the reference signal during the time period of the clock mask based on the first triggering state, counting a number Nd2 of second triggering states occurring to the phase shift signals during a time period from a point in time of termination of the clock mask to occurrence of a first triggering state to the reference signal, and outputting values d, Fb, M, Nb, Nd1, and Nd2; and

a computing device connected to the speedometer for receiving the values d, Fb, M, Nb, Nd1, and Nd2, performing computation with the equation below to obtain a time t of the object, and performing computation of speed measurement of the object based on the time t and the distance measurement d,

$$t = (Nb/Fb) + [Nd1/(Fb/M)] - [Nd2/(Fb/M)]$$

where M 2.

8. The system of claim 7, wherein the speedometer comprises:

a fundamental frequency generating unit for generating a fundamental frequency signal;

a frequency multiplying unit connected to the fundamental frequency generating unit for turning the fundamental frequency signal into the reference signal by frequency multiplication; and

a programmable gate array connected to the distance measurement signal input end for receiving the start signal, the end signal, and the distance measurement d, connected to the frequency multiplying unit for receiving the reference signal, and adapted to generate the values M, Nb, Nd1, and Nd2 and output the values d, Fb, M, Nb, Nd1, and Nd2.

9. The system of claim 8, wherein the computing device replaces the count value Fb with a default value.

10. The system of claim 7, wherein the computing device is one of a control unit and a computer.

11. The system of claim 7, wherein the first triggering state is one of an upper-edge triggering state and a lower-edge triggering state, and the second triggering state is one of an upper-edge triggering state and a lower-edge triggering state.

FIG. 1

S101

provide Fb,Fb-p1~Fb-p8

S102

set clock mask mk based on
signals SS and ES

S103

obtain number Nd1 of
front-end errors

S104

shut down clock mask mk and
obtain number Nb

S105

obtain number Nd2 of
back-end errors

S106

perform computation of time t

S201

provide distance
measurement d

S301

perform computation of speed
measurement

FIG. 2

120

110

**distance measurement signal input end**

105

**distance measurement unit**

121

**fundamental frequency generating unit**

123

**frequency multiplying unit**

125

**programmable gate array**

130

**computing device**

100

FIG. 3

Europäisches
Patentamt

European
Patent Office

Office européen
des brevets

# EUROPEAN SEARCH REPORT

**Application Number**

EP 11 18 2872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 112 358 A (ASHIDA HITOSHI) 5 September 1978 (1978-09-05) * column 1, line 12 - line 18 * * column 2, line 2 - column 3, line 28 * * figure 2 * | 1-11 | INV. G01P3/489 |
| Y | DE 33 36 359 A1 (ELSTER AG [DE]) 18 April 1985 (1985-04-18) * page 3 - page 6 * | 1-11 | |
| Y | US 4 786 861 A (HULSING II RAND H [US] ET AL) 22 November 1988 (1988-11-22) * column 4, line 37 - line 55 * * figure 3 * | 1-11 | |
| Y | GB 2 018 067 A (CATERPILLAR TRACTOR CO) 10 October 1979 (1979-10-10) * page 1, line 25 - line 35 * | 1-11 | |
| Y | US 2003/197498 A1 (WATANABE TAKAMOTO [JP] ET AL) 23 October 2003 (2003-10-23) * paragraph [0054] * * paragraph [0062] * * figure 2 * | 1-11 | TECHNICAL FIELDS SEARCHED (IPC) G01P |
| Y | EP 1 548 460 A1 (TDK CORP [JP]) 29 June 2005 (2005-06-29) * paragraph [0068] * * figure 13 * | 1-11 | |
| Y | JP 6 138230 A (NEC CORP) 20 May 1994 (1994-05-20) * abstract * | 1-11 | |

The present search report has been drawn up for all claims

| Place of search | Date of completion of the search | Examiner |
|---|---|---|
| Munich | 13 March 2012 | Rabenstein, Winfried |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 11 18 2872

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2012

| Patent document cited in search report | | Publication date | Patent family member(s) | | Publication date |
|---|---|---|---|---|---|
| US 4112358 | A | 05-09-1978 | JP | 52123670 A | 18-10-1977 |
| | | | US | 4112358 A | 05-09-1978 |
| DE 3336359 | A1 | 18-04-1985 | NONE | | |
| US 4786861 | A | 22-11-1988 | CA | 1278041 C | 18-12-1990 |
| | | | EP | 0330693 A1 | 06-09-1989 |
| | | | JP | H01502933 A | 05-10-1989 |
| | | | US | 4786861 A | 22-11-1988 |
| | | | WO | 8902080 A1 | 09-03-1989 |
| GB 2018067 | A | 10-10-1979 | GB | 2018067 A | 10-10-1979 |
| | | | JP | 1646075 C | 13-03-1992 |
| | | | JP | 2062703 B | 26-12-1990 |
| | | | JP | 54135930 A | 22-10-1979 |
| US 2003197498 | A1 | 23-10-2003 | NONE | | |
| EP 1548460 | A1 | 29-06-2005 | EP | 1548460 A1 | 29-06-2005 |
| | | | JP | 2005181180 A | 07-07-2005 |
| | | | KR | 20050063677 A | 28-06-2005 |
| | | | US | 2005134498 A1 | 23-06-2005 |
| JP 6138230 | A | 20-05-1994 | NONE | | |

EPO FORM P0459

For more details about this annex : see Official Journal of the European Patent Office, No. 12/82